# EUROPEAN PATENT SPECIFICATION

(11) **EP 2 256 232 B1**
(45) Date of publication and mention of the grant of the patent: **30.10.2013**
(21) Application number: 10164265.0
(22) Date of filing: 28.05.2010
(51) Int. Cl.: C23C 28/00, C23C 8/02, C23C 8/60, B29C 45/16, B29C 45/00, H01M 2/04, B29C 45/14

(54) **Metal-resin composite and method**
Metallharz-Verbundstoff und Verfahren
Composite de résine métallique et procédé

(30) Priority: 31.05.2009 CN 200910107550
(43) Date of publication of application: 01.12.2010
(73) Proprietor: Byd Company Limited, Shenzhen 518118 (CN)
(72) Inventor: Gong, Qing, Shenzhen, 518118 (CN); Zhou, Liang, Shenzhen, 518118 (CN); Lv, Xinkun, Shenzhen, 518118 (CN)
(74) Representative: HOFFMANN EITLE

(56) References cited:
- JP-A- 2004 319 259
- KR-B1- 100 777 097

## Description

### CROSS-REFERENCE TO RELATED APPLICATION

This application claims priority to Chinese Patent Application No. 200910107550.2 filed on May 31, 2009, the entirety of which is incorporated by reference.

### FIELD OF THE DISCLOSURE

The disclosure relates to a metal-resin composite, particularly to a composite of a metal and a polyphenylene sulfide resin, and a method for preparing the same.

### BACKGROUND OF THE DISCLOSURE

Lithium ion batteries are widely used in the electric industry, information technology industry, and other fields. The lithium ion batteries have numerous advantages, such as high voltages, high capacities, no memory effects, low pollutions, small volumes, high specific energy, small resistances, low self-discharge, high-cycle life, safe, and adjustable shapes.

Lithium ion batteries require that a battery core containing an electrolyte solution is placed in a sealed shell. Typically, the sealing material of the shell is metal-rubber composites. The electrolyte solution may leak from the sealed shell after the battery is recharged for certain times.

One example in the prior art discloses a metal-resin composite. The composite comprises: (1) a magnesium alloy; (2) a layer having a metal oxide, a metal carbonate, or a metal phosphate on the surface of the magnesium alloy; and (3) a resin layer. The main component of the resin layer is a polybutylene terephthalate resin or a polyphenylene sulfide resin, a thermosplastic resin with crystalline property. The resin is introduced into concavities of the surface of the alloy by an injection molding process.

Another example in the prior art discloses a method of manufacturing a composite of an aluminum alloy and a resin. The method comprises the steps of: immersing the aluminum alloy into at least one selected from the group consisting of ammonia solutions, hydrazine solutions and water-soluble amide compounds; and applying a polyphenylene sulfide resin into the alloy by an injection molding method. The method requires complex steps.

JP 2004 319259 concerns a resin battery case and a metal resin multilayer plate which is integrally formed in the hermetic rechargeable battery cell. A layer coming into contact with a metal of the metal resin multilayer plate is formed from modified hydrogenated block copolymer.

### SUMMARY OF THE DISCLOSURE

In a first aspect, the present invention is directed to a metal-resin composite comprising:
a metal substrate having concavities in the surface , wherein the concavities have depths of from 0.2 to 10 µm;
a first coating layer comprising a polyphenylene sulfide resin and titanium dioxide particles on the surface of the metal substrate;
wherein the first coating layer fills concavities and covers the surface of the substrate; and
a second coating layer comprising a polyphenylene sulfide resin and an inorganic material, carbon fibers and/or aromatic polyamide fibers on the first layer.

In a second aspect, the present invention is directed to a method for preparing a metal-resin composite, comprising:
etching the surface of a metal substrate;
preparing a slurry comprising a polyphenylene sulfide resin, an organic solvent, titanium dioxide, a coupling agent, and water;
applying the slurry on the surface of the metal substrate; calcining the coated metal substrate under the protection of an inert gas or vacuum to form a precast composite; preparing a mixture comprising a polyphenylene sulfide resin and an inorganic material, carbon fibers and/or aromatic polyamide fibers, wherein the weight ratio of the inorganic material, carbon fibers and/or aromatic polyamide fibers to the polyphenylene sulfide resin is from 4 to 8; and applying the mixture onto the precast composite by an injection molding process to form a metal-resin composite.

In a third aspect, the present invention provides a battery comprising:
a shell;
a core displaced in the shell;
an electrolyte; and
a cover plate closing the shell;
wherein the cover plate comprises the metal-resin composite as defined in the first aspect.

### BRIEF DISCRIPTION OF THE DRAWINGS

FIG. 1 is a front view of a battery cover plate formed from a composite according to one embodiment of the disclosure.

FIG. 2 is a left side view of a battery cover plate formed from a composite according to one embodiment of the disclosure.

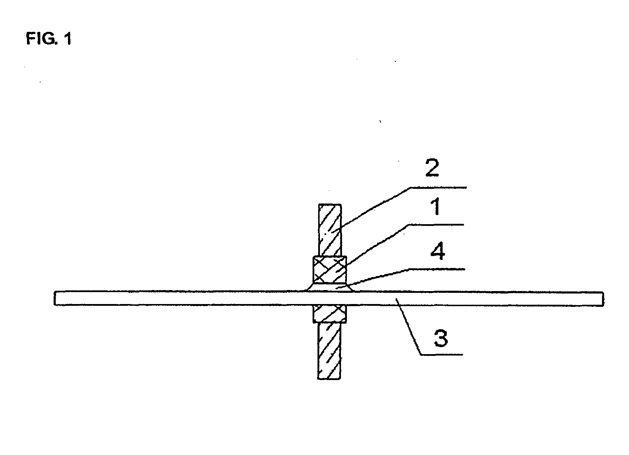

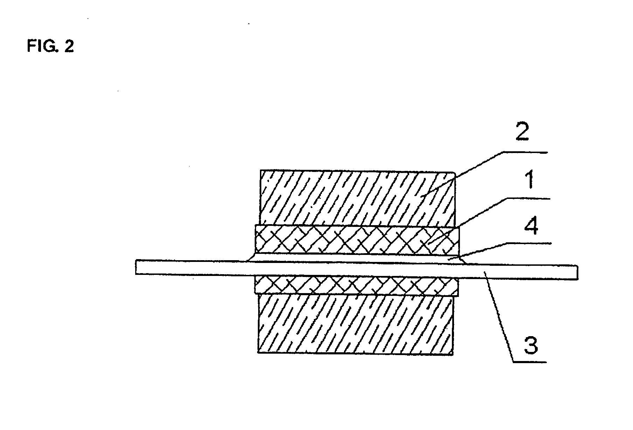

In FIG. 1 and FIG 2, the number 1 refers to a metal-resin composite. 2 is a metal electrode. 3 is a metal or an alloy. 4 is a component for securing the parts of the cover plate.

### DETAILED DISCRIPTION OF THE EMBODIMENT

One embodiment discloses a metal-resin composite. The composite comprises a metal substrate with concavities in the surface, a first coating layer on the surface of the metal substrate, and a second coating layer on the first coating layer. The first coating layer fills the concavities and covers the surface of the substrate.

The first coating layer comprises a polyphenylene sulfide resin and titanium dioxide particles. The second coating layer comprises a polyphenylene sulfide resin and an inorganic material, carbon fibers and/or aromatic polyamide fibers. Preferably, this material is selected from the group consisting of glass fibers, carbon fibers, aromatic polyamide fibers, calcium carbonates, magnesium carbonate, silicon dioxide, talcum powder, and combinations thereof.

The concavities in the metal surface can be obtained by an etching process. The etching process may have an influence on the distributions and depths of the concavities in the metal surface, which affect the adhesive strength between the metal substrate and the first coating layer. If the etching time is too long, the diameters and depths of the concavities will be too large, which may affect the smoothness of the first coating layer, the adhesive strength between the first coating layer and the metal substrate, and sealing properties of the composite. On the other hand, if the etching time is too short, the concavities may have an uneven distribution and small depths, which may affect adhesive property of the first coating layer and the metal substrate and the sealing property of the composite. In the embodiments of the disclosure, the etching time varies according to the types of the metal substrates.

According to one embodiment, the first coating layer comprises a polyphenylene sulfide resin and titanium dioxide particles in a weight ratio of the polyphenylene sulfide resin to titanium dioxide from about 1:1 to about 15:1. The titanium dioxide particles have an average diameter of from about 100 to about 1000 µm. Preferably, the titanium dioxide particles have an average particle diameter of from about 200 to about 500 µm. To mix the titanium oxide particles and the polyphenylene sulfide resin and avoid the conglobation of titanium dioxide particles, the surface of titanium dioxide particles can be modified to be lipophilic, hydrophilic, or amphipathic. The modification can be achieved by a coupling agent. The coupling agent can be any agents known to those with ordinary skills in the art. For example, the coupling agent can be selected from titanate coupling agents, alkyl silane coupling agents, and aminosilane coupling agents. The coupling agents can be commercially available products, such as KH-550 coupling agent from Nanjing Lipai Chemical Co., Ltd., and KR-12 coupling agent from Kanrich Electronic Corp.

Preferably, the first coating layer has a thickness of from about 0.1 to about 2000 µm. In some embodiments, the first coating layer has a depth of from about 20 to about 300 µm. In an embodiment, the first coating layer is prepared by coating one time. In other embodiments, the first coating layer is prepared by coating more than one time. In the coating process, an airbrush can be used to apply the coating slurry onto the metal substrate. The operating pressure can be from about 1 to about 10 atm. Preferably, the coated metal substrate is calcined at a temperature of from about 300 °C to about 350 °C , for a period of time from about 20 to 60 minutes, to form a precast composite. In an embodiment, the temperature is from about 320 °C to about 330 °C. Preferably, the coating process is performed under a vacuum. The metal substrate can be calcined one time, or more than one time. In some embodiments, the coating process is performed under an inert gas. The precast composite is cooled down in water. In other embodiments, the precast composite is cooled down in the air.

In the coating process, the polyphenylene sulfide resin melts into a liquid state. The liquid resin can penetrate into the ultrafine concavities in the substrate surface by capillary action. The liquid resin also forms a half cross-link layer on the substrate surface. As a result, the first layer is bonded to the metal substrate closely and covers the surface of the metal substrate. Further, as the first and second layers are both formed from polyphenylene sulfide resin, they can bond with each other closely. Therefore, the difficulty of applying a second polyphenylene sulfide resin layer on the first layer is overcomed. Because of the low solidification temperature, if the polyphenylene sulfide resin is directly applied onto a metal substrate, it may rapidly cool down and solidify when it contacts with the metal substrate. Moreover, the rapid solidification also prevents the resin from penetrating into the ultrafine concavities in the substrate surface. As a result, the metal substrate may not be fully sealed, and also may not strongly bond to the coating layer.

The second layer comprises a polyphenylene sulfide resin and an inorganic material, carbon fibers and/or aromatic polyamide fibers. The material is preferably selected from the group consisting of glass fibers, carbon fibers, aromatic polyamide fibers, calcium carbonate, magnesium carbonate, silicon dioxide, talcum powder, and combinations thereof.

In an embodiment, the weight ratio of the inorganic material to the polyphenylene sulfide resin is from about 4 to 8. The presence of the inorganic material allows the polyphenylene sulfide resin easy to solidify, and reduces its coefficient of linear expansion to be equal with that of the metal substrate. The second layer can have any suitable thickness. The thickness can vary as needed.

The metal substrate referred above can be selected from the group consisting of copper, copper alloys, aluminum, aluminum alloys, stainless steel, iron alloys, and combinations thereof.

In some embodiments, a method for preparing a metal-resin composite is disclosed. The method comprises the steps of: (1) etching the surface of a metal substrate; (2) preparing a slurry; (3) applying the slurry on the surface of the metal substrate; (4) calcining the metal substrate to form a precast composite; (5) preparing a mixture; and (6) applying the mixture onto the precast composite by an injection molding process to form a metal-resin composite.

Preferably, surface conversion treatments can be performed on the metal substrate. Surface conversion treatments are well-known to those with ordinary skills in the art, such as polishing, grease removal, and other treatments. One object of polishing is to remove the oxidation layer of the metal substrate. The other object is to form ultrafine concavities in the surface of the metal substrate. For example, concavities with a micrometer-size can be prepared by polishing with 150 to 400 grit abrasive papers or sandblasting devices. The object of grease removal is to remove grease and metal powders produced during the polishing process. Preferably, acid or alkali aqueous solutions are employed in the etching process. The acid or alkali aqueous solutions are well known to those with ordinary skill in the art, such as hydrochloric acid solutions, sulfuric acid solutions, sodium hydroxide solutions, potassium hydroxide solutions and so on. According to some embodiments, a hydrochloric acid solution with a concentration of from about 0.1 to about 0.5 mol/L, a sulfuric acid solution, or a nitric acid solution with the same concentration is applied to form uneven concavities with depths of from about 0.2 to about 10 µm on the surface of the metal substrate. Referring to the some embodiments, the concavities have an average diameter of from about 2 to about 5 µm, and depths of from about 1 to about 2 µm. Etching results may be controlled by varying the etching conditions. The optimal distribution and depth may enhance the bonding between the metal substrate and the first layer, and the sealing property of the composite.

The slurry for the first layer is prepared by mixing a polyphenylene sulfide resin, an organic solvent, titanium dioxide particles, a coupling agent, and water at a certain ratio. According to the one embodiment, the weight ratio of the polyphenylene sulfide resin, the organic solvent, titanium dioxide, the coupling agent, and water is about (15-1): (30-100): 1: (0-10):(0-10). The polyphenylene sulfide resin, the organic solvent, titanium dioxide particles, the coupling agent, and water are mixed in a container. The mixture is stirred at a speed of from about 100 to about 300 r/s, a period of time from about 1 to about 120 minutes. In another embodiment, an ultrasonic wave is applied for about 5 to about 60 minutes to prepare a slurry for the first layer. The organic solvent are well known to those with ordinary skills in the art, such as anhydrous alcohols, 70% industrial ethyl alcohol, acetone, and the like. Preferably, the titanium dioxide particles have an average particle diameter of from about 100 to about 1000 nm. In some embodiments, the average particle diameter is from about 200 to about 500 nm. The coupling agent can be titanate coupling agents, alkyl silane coupling agents, and aminosilane coupling agents, which can be formed through methods well known to those with ordinary skills in the art, or purchased from vendors.

According to the present embodiment, the first layer has a thickness of from about 20 to about 300 µm.

Preferably, the step of calcining the metal substrate is performed under a vacuum or an inert gas. Preferably, the vacuum degree is less than 0.01 mPa. The inert gas can be selected from the group consisting of helium, argon, nitrogen, other inert gases, and the combination of hydrogen and nitrogen.

According to the present embodiment, the step of calcining is performed under a temperature of from about 300 to about 350 °C, for a period of from about 10 to about 60 minutes. In other embodiments, the calcining step is performed under a temperature of from about 320 to about 330 °C, for a period of from about 20 to about 30 minutes. An extremely high temperature may not favor the formation of the first layer and the bonding with the metal substrate. On the other hand, an extremely low temperature may increase the time of the melted resin spreading on the substrate and the viscosity of the melted resin, which makes it more difficult to penetrate into concavities of the metal substrate. Therefore, the efficiency of the bonding between the first layer and the metal substrate may be decreased. Further, an extremely high temperature or extremely long heating time may increase the surface oxidation of the metal substrate and the cross-link of the first layer. Neither the oxidation of the metal substrate nor the extremely cross-linked polyphenylene sulfide resin is favoring the adhesion between the metal substrate and the first layer.

The mixture for the second layer is prepared by mixing and granulating a polyphenylene sulfide resin and an inorganic material, carbon fibers and/or aromatic polyamide fibers at a ratio of from about 4 to 8.

In an embodiment, an aluminum alloy is used as a metal substrate. First, surface conversion treatments are performed, such as polishing, grease removal, and etching. The polishing and grease removal methods are well known to those with ordinary skills in the art. The etching process comprises the steps of: immersing the metal substrate into a sodium hydroxide solution with a concentration of from about 0.1 to about 0.5 mol/L for about 30 seconds to about 10 minutes; washing the substrate with running water for from about 1 to about 5 minutes; immersing the washed metal substrate in a hydrochloride solution with a concentration of from about 0.1 to about 0.5 mol/L for about 10 seconds to about 5 minutes; washing the substrate with running water for from about 1 to about 5 minutes; optionally immersing the metal substrate in an alcohol solution containing about 0.5 to about 5% by weight of coupling agents for about 1 to about 10 minutes; removing water from the metal substrate under a temperature of about 100 to about 150°C for about 10 to about 60 minutes to provide a pretreated aluminum alloy substrate.

A slurry is prepared. A polyphenylene sulfide resin is mixed with ethanol, titanium dioxide particles. Preferably, a coupling agent and water are added into the mixture. The weight ratio of ethanol, titanium dioxide, the coupling agent and water is about (5-40): (30-100): (1-5): (0-5) : (0-5). The mixture is stirred in a vessel and dispersed by ultrasonic waves for about 10 to about 30 minutes to provide a slurry.

The slurry with a thickness of from about 20 to about 300 µm is coated on the aluminum alloy. The coating may be performed by an airbrush with an operating pressure of from about 1 to about 10 atm.

The coated aluminum alloy is calcined under a temperature of from about 300 to about 350 °C under a vacuum or a protective gas for from about 20 to about 60 minutes to prepare a precast metal substrate. Then the precast metal substrate is cooled down in water or air slowly. In some embodiments, the coating is performed one time or more than one time.

A mixture is prepared for the second coating layer. The mixture contains a polyphenylene sulfide resin, an inorganic material powder, and an inorganic material fiber at a weight ratio of about 1 : (0-4): (0-4). The mixture is granulated by a twin screw extruder.

The precast metal substrate is coated by the mixture prepared above by an injection molding process to provide a metal-resin composite.

One embodiment of the present disclosure further provides a battery. The battery comprises a shell, a core displaced in the shell, an electrolyte; and a cover plate. The cover plate closes and seals the shell. The cover plate is formed from a metal-resin composite comprising a metal substrate having concavities in the surface, a first coating layer on the surface of the metal substrate, and a second coating layer on the first layer. The first coating layer fills concavities and covers the surface of the substrate.

In an embodiment, there is no gas leakage under a pressure of about 5 atm. Some embodiments can stand the pressure of about 10 atm without gas leakage.

The following provides additional details of some embodiments of the present disclosure.

### EMBODIMENT 1

The embodiment discloses a metal-resin composite and a method for preparing the same.

An aluminum alloy substrate is cut and pressed to a rectangular shape with a size of 10 cm × 2 cm × 0.2 mm. The surface of the substrate is polished with a 300 grit abrasive paper for about 2 minutes. The substrate is immersed into ethanol, acetone, or detergent solutions for about 30 minutes. Then the substrate is cleaned with running water. The substrate is immersed into a sodium hydroxide solution with a concentration of about 0.2 mol/L for about 5 minutes. Then the substrate is cleaned with running deionized water. The substrate is immersed into a hydrochloride solution with a concentration of about 0.1 mol/L for about 1 minute. The substrate is washed with running deionized water.

30 g polyphenylene sulfide resin powder (PPS-ha resin powder from Sichuan Deyang chemical Co., Ltd), 7 g titanium dioxide particles, 60 g ethanol, and 3 g deionized water are mixed and dispersed by an ultrasonic device to provide a slurry.

The slurry is coated onto the substrate by a spray gun with a nozzle diameter of about 0.3 mm. The coating process is performed one time under a pressure of about 2 atm, to form a metal substrate with a slurry with a thickness of about 200 µm.

The coated metal substrate is calcined at a temperature of about 320°C and an atmosphere of argon for about 25 minutes. The calcined metal substrate is quenched in water to form a precast metal substrate.

A mixture is prepared by granulating a polyphenylene sulfide resin, a glass fiber, and talcum powder at a weight ratio of about 1 : 2 : 2. The granulating is performed with a twin screw extruder (MT75 co-rotating twin screw extruder bought from Jiangsu Meizlon Machinery CO.,LTD.) to form a mixture.

The precast substrate is placed in an injection molding machine and 80 g of the mixture is injected into the machine to form a metal-resin composite, labeled asT1.

### EMBODIMENT 2

The embodiment discloses a metal-resin composite and a method for preparing the same.

An aluminum alloy substrate is cut into a rectangular shape with a size of 10 cm × 2 cm × 0.2 mm. The surface of the substrate is polished with a 300 grit abrasive paper for about 2 minutes. The substrate is immersed into ethanol, acetone or detergent solutions for about 30 minutes. Then the substrate is cleaned with running water. The substrate is immersed into a sodium hydroxide solution with a concentration of about 0.15 mol/L for about 10 minutes. Then the surface is cleaned with running deionized water. The substrate is immersed into a hydrochloride solution with a concentration of about 0.02 mol/L for about 2 minutes. Then the substrate is cleaned with running deionized water. The substrate is immersed into an alcohol solution with 5% by weight of KH570 silane coupling agent for about 5 minutes. The substrate is dried at a temperature of about 120°C for about 1 hour.

About 6 g of polyphenylene sulfide resin powder (PPS-ha resin powder from Sichuan Deyang chemical Co., Lid), 5 g titanium dioxide, 5 g ethanol, 3 g deioned water, and 2 g KH570 silane coupling agent are mixed by an ultrasonic machine to form a slurry.

The slurry is coated onto the metal substrate by a spray gun. The coating process is performed three times. Each time the substrate is coated with a layer with a thickness of about 100 µm. The substrate has a coating layer with a thickness of about 300 µm after coating three times.

The substrate is calcined at a temperature of about 330°C and an atmosphere of nitrogen for about 15 minutes. The calcined metal substrate is cooled down to provide a precast metal substrate.

A polyphenylene sulfide resin, a glass fiber, and talcum powder are mixed at a weight ratio of about 2 : 0.5 : 0.5. The mixture is granulated in a twin screw extruder (MT75 co-rotating twin screw extruder bought from Jiangsu Meizlon Machinery CO., LTD.) to form a mixture.

The precast substrate is placed in an injection molding machine and 60 g of the mixture is injected into the machine to form a metal-resin composite, labeled as T2.

### EMBODIMENT 3

The embodiment discloses a metal-resin composite and a method for preparing the same.

A copper substrate is cut into a rectangular substrate with a size of 10 cm × 2 cm × 0.2 mm. The surface is polished with a150 grit abrasive paper for about2 minutes. The substrate is immersed into ethanol, acetone or detergent solutions for about 30 minutes. Then the substrate is cleaned with running water. The substrate is immersed into a sodium persulfate solution with a weight concentration of about 25% for about 3 minutes. Then the substrate is cleaned with running deionized water. The substrate is dried in the air.

About 7 g of polyphenylene sulfide resin powder (PPS-ha resin powder from Sichuan Deyang chemical Co., Ltd), 5 g of titanium dioxide, 60 g of ethanol, and 5 g deionized water are mixed and dispersed by an ultrasonic machine to form a slurry.

The slurry is sprayed onto the metal substrate by a spray gun with a nozzle diameter of about 0.3 mm. The coating process is performed by more than one time under a pressure of about 1.5 atm, to form a coating layer of a thickness of about 150 µm.

The metal substrate is calcined at a temperature of about 330 °C and an atmosphere of helium for about 20 minutes. The substrate is quenched in water to provide a precast metal substrate.

A polyphenylene sulfide resin, a glass fiber, and talcum powder are mixed at a weight ratio of about 1: 1 : 1. The mixture is granulated in a twin screw extruder (MT75 co-rotating twin screw extruder_bought from Jiangsu Meizlon Machinery CO., LTD.) to form a mixture.

The substrate is placed in an injection molding machine and 70 g of the mixture is injected into the machine to provide a metal-resin composite, labeled as T3.

### COMPARATIVE EMBODIMENT 1

The Comparison Embodiment is substantially similar in all aspects to that of a reference patent with a publication number CN171170A. The composite of the same size as the reference is labeled TC1.

### TESTING

### Tensile testing

A tensile testing machine (Sans Testing Machine Inc.) is applied to test the tensile and air tightness of T1 to TC1. The testing results are shown in Table 1. Sealing testing

High pressure air is applied from one end to the other end of the battery. The pressure starts from 0. A foaming agent is applied at the position where the metal substrate contacts with the first coating layer. Therefore, if the metal-resin composite cannot meet requirements of sealing, gases would be released from the contacting position between the metal substrate and the first layer, foams would be generated. When foaming occurs, the value of pressure is recorded and the detailed testing results are shown in Table 1.

**Table 1**

| Samples | Tensile Strength/MPa | Maximum Pressure Without Air Releasing |
|---|---|---|
| T1 | 24 | 8 atm |
| T2 | 27 | 10 atm |
| T3 | 24 | 10 atm |
| TC1 | 20 | <0.1 atm |

As shown in Table 1, gas releasing may not happen to T2 under a pressure of 10 atm, while the TC1 may release gases in the pressure of 0.1 1 atm. Further, T2 has a tensile strength of 27 MPa, while TC1 has a tensile strength of 20 MPa.

## Claims

1. A metal-resin composite comprising:
a metal substrate having concavities in the surface , wherein the concavities have depths of from 0.2 to 10 µm;
a first coating layer comprising a polyphenylene sulfide resin and titanium dioxide particles on the surface of the metal substrate;
wherein the first coating layer fills concavities and covers the surface of the substrate; and
a second coating layer comprising a polyphenylene sulfide resin and an inorganic material, carbon fibers and/or aromatic polyamide fibers on the first layer.

2. The composite of claim 1, wherein the first coating layer has a thickness of from 20 to 300 µm.

3. The composite of claim 1, wherein the titanium dioxide particles have an average diameter of from 200 to 500 nanometers.

4. The composite of claim 1, wherein the weight ratio of the polyphenylene sulfide resin to titanium dioxide is from 1 to 15.

5. The composite of claim 1, , wherein the second coating layer comprises a polyphenylene sulfide resin and a material selected from the group consisting of glass fibers, carbon fibers, aromatic polyamide fibers, calcium carbonate, magnesium carbonate, silicon dioxide, talcum powder, and combinations thereof.

6. The composite of claim 1, wherein the weight ratio of the inorganic material to the polyphenylene sulfide resin is from 4 to 8.

7. The composite of claim 1, wherein the metal substrate is selected from the group consisting of copper, copper alloys, aluminum, aluminum alloys, stainless steel, iron alloys, and combinations thereof.

8. A method for preparing a metal-resin composite, comprising:
etching the surface of a metal substrate;
preparing a slurry comprising a polyphenylene sulfide resin, an organic solvent, titanium dioxide, a coupling agent, and water;
applying the slurry on the surface of the metal substrate;
calcining the coated metal substrate under the protection of an inert gas or vacuum to form a precast composite;
preparing a mixture comprising a polyphenylene sulfide resin and an inorganic material, carbon fibers and/or aromatic polyamide fibers, wherein the weight ratio of the inorganic material, carbon fibers and/or aromatic polyamide fibers to the polyphenylene sulfide resin is from 4 to 8; and
applying the mixture onto the precast composite by an injection molding process to form a metal-resin composite.

9. The method of claim 8, wherein the calcining step is performed under a temperature of from 300 to 350°C for 10 to 60 minutes.

10. A battery comprising:
a shell;
a core displaced in the shell;
an electrolyte; and
a cover plate closing the shell;
wherein the cover plate comprises the metal-resin composite as defined in claim 1.

## Patentansprüche

1. Metall-Harz-Verbundmaterial, umfassend
ein Metallsubstrat mit Einbuchtungen in der Oberfläche, worin die Einbuchtungen Tiefen von 0,2 bis 10 µm haben;
eine erste Beschichtung, die ein Polyphenylensulfidharz und Titandioxidpartikel umfasst, auf der Oberfläche des Metallsubstrats;
worin die erste Beschichtung Einbuchtungen ausfüllt und die Oberfläche des Substrats bedeckt; und
eine zweite Beschichtung, die ein Polyphenylensulfidharz und ein anorganisches Material, Kohlefasern und/oder aromatische Polyamidfasern umfasst, auf der ersten Schicht.

2. Verbundmaterial gemäß Anspruch 1, worin die erste Beschichtung eine Dicke von 20 bis 300 µm hat.

3. Verbundmaterial gemäß Anspruch 1, worin die Titandioxidpartikel einen mittleren Durchmesser von 200 bis 500 nm haben.

4. Verbundmaterial gemäß Anspruch 1, worin das Gewichtsverhältnis des Polyphenylensulfidharzes zum Titandioxid 1 bis 15 ist.

5. Verbundmaterial gemäß Anspruch 1, worin die zweite Beschichtung ein Polyphenylensulfidharz und ein Material ausgewählt aus der Gruppe bestehend aus Glasfasern, Kohlenfasern, aromatischen Polyamidfasern, Kalziumcarbonat, Magnesiumcarbonat, Siliziumdioxid, Talkpulver und Kombinationen davon umfasst.

6. Verbundmaterial gemäß Anspruch 1, worin das Gewichtsverhältnis des anorganischen Materials zum Polyphenylensulfidharz von 4 bis 8 ist.

7. Verbundmaterial gemäß Anspruch 1, worin das Metallsubstrat aus der Gruppe bestehend aus Kupfer, Kupferlegierungen, Aluminium, Aluminiumlegierungen, Edelstahl, Eisenlegierungen und Kombinationen davon ausgewählt ist.

8. Verfahren zur Herstellung eines
Metallharzverbundmaterials, umfassend:
Ätzen der Oberfläche eines Metallsubstrats;
Herstellung einer Aufschlämmung, die ein Polyphenylensulfidharz, ein organisches Lösungsmittel, Titandioxid, ein Kopplungsmittel und Wasser umfasst;
Auftragen der Aufschlämmung auf die Oberfläche des Metallsubstrats;
Kalzinieren des beschichteten Metallsubstrats unter dem Schutz eines inerten Gases oder Vakuum, um ein vorgefertigtes Verbundmaterial zu bilden;
Herstellung einer Mischung, die ein Polyphenylensulfidharz und ein anorganisches Material, Kohlenfasern und/oder aromatische Polyamidfasern umfasst, worin das Gewichtsverhältnis des anorganischen Materials, Kohlenfaser und/oder aromatischen Polyamidfasern zum Polyphenylensulfidharz von 4 bis 8 ist; und
Auftragen der Mischung auf das vorgefertigte Verbundmaterial durch ein Spritzgussverfahren, um ein Metallharzverbundmaterial zu bilden.

9. Verfahren gemäß Anspruch 8, worin der Kalzinierschritt unter einer Temperatur von 300 bis 350°C über 10 bis 60 Minuten durchgeführt wird.

10. Batterie, umfassend:
eine Hülle;
einen Kern, der in die Hülle eingebracht ist;
einen Elektrolyten; und
eine Deckplatte, die die Hülle abschließt;
worin die Deckplatte das Metall-Harz-Verbundmaterial gemäß Anspruch 1 umfasst.

## Revendications

1. Composite métal-résine comprenant :
un substrat métallique ayant des concavités dans la surface, où les concavités ont des profondeurs allant de 0,2 à 10 µm ;
une première couche de revêtement comprenant une résine de poly(sulfure de phénylène) et des particules de dioxyde de titane sur la surface du substrat métallique ;
où la première couche de revêtement remplit les concavités et recouvre la surface du substrat ; et
une deuxième couche de revêtement comprenant une résine de poly(sulfure de phénylène) et un matériau inorganique, des fibres de carbone et / ou des fibres polyamides aromatiques sur la première couche.

2. Composite de la revendication 1, dans lequel la première couche de revêtement a une épaisseur allant de 20 à 300 µm.

3. Composite de la revendication 1, dans lequel les particules de dioxyde de titane ont un diamètre moyen allant de 200 à 500 nanomètres.

4. Composite de la revendication 1, dans lequel le rapport pondéral de la résine de poly(sulfure de phénylène) sur le dioxyde de titane est compris entre 1 et 15.

5. Composite de la revendication 1, dans lequel la deuxième couche de revêtement comprend une résine de poly(sulfure de phénylène) et un matériau choisi dans le groupe constitué de fibres de verre, de fibres de carbone, de fibres polyamides aromatiques, de carbonate de calcium, de carbonate de magnésium, de dioxyde de silicium, de poudre de talc et de combinaisons de ceux-ci.

6. Composite de la revendication 1, dans lequel le rapport pondéral du matériau inorganique sur la résine de poly(sulfure de phénylène) est compris entre 4 et 8.

7. Composite de la revendication 1, dans lequel le substrat métallique est choisi dans le groupe constitué de cuivre, d'alliages de cuivre, d'aluminium, d'alliages d'aluminium, d'acier inoxydable, d'alliages de fer, et de combinaisons de ceux-ci.

8. Procédé destiné à préparer un composite métal-résine, comprenant le fait :
de graver la surface d'un substrat métallique ;
de préparer une suspension comprenant une résine de poly(sulfure de phénylène), un solvant organique, du dioxyde de titane, un agent de couplage, et de l'eau ;
d'appliquer la suspension sur la surface du substrat métallique ;
de calciner le substrat métallique revêtu sous la protection d'un gaz inerte ou sous vide pour former un composite pré-moulé ;
de préparer un mélange comprenant une résine de poly(sulfure de phénylène) et un matériau inorganique, des fibres de carbone et / ou des fibres polyamides aromatiques, où le rapport pondéral du matériau inorganique, des fibres de carbone et / ou des fibres polyamides aromatiques sur la résine de poly(sulfure de phénylène) est compris entre 4 et 8 ; et
d'appliquer le mélange sur le composite pré-moulé par un procédé de moulage par injection pour former un composite métal-résine.

9. Procédé de la revendication 8, dans lequel l'étape de calcination est effectuée à une température allant de 300 à 350 °C pendant 10 à 60 minutes.

10. Batterie comprenant :
une enveloppe ;
un noyau déplacé dans l'enveloppe ;
un électrolyte ; et
une plaque de recouvrement fermant l'enveloppe ;
où la plaque de recouvrement comprend le composite métal-résine tel que défini dans la revendication 1.
